# EUROPEAN PATENT APPLICATION

(11) **EP 4 752 381 A1**
(43) Date of publication of application: **03.06.2026**
(21) Application number: 24215880.6
(22) Date of filing: 27.11.2024
(51) Int. Cl.: F16B 5/02, F16B 43/00, F16B 43/02

(54) **TOLERANCE-COMPENSATION UNIT AND FASTENING ASSEMBLY HAVING A TOLERANCE-COMPENSATION FUNCTION**

(71) Applicant: MINEBEA ACCESSSOLUTIONS ITALIA S.P.A., 10044 Pianezza (IT)
(72) Inventor: POLIBIO, Alessandro, 10044 PIANEZZA (IT)
(74) Representative: Germain Maureau

(57) **Abstract**

The invention relates to a tolerance-compensation unit (10) for a fastening assembly, comprising:
- a base element (12) having a central portion (120) and a through opening (120c) provided in the central portion (120), the central portion (120) having a spherical shaped first surface (120a) and an opposite, spherical shaped second surface (120b),
- a first bushing (14) having a spherical-shaped first surface (140) and an opposite, planar second surface (142),
- a second bushing (16) having a first spherical-shaped surface (160) and an opposite, planar second surface (162),
the first and second bushings (14, 16) being configured to be connected together through the opening (120c) of the base element (12) so that the central portion (120) of the base element (12) is sandwiched between the first and second bushings (14, 16), while allowing the central portion (120) of the base element (12) to slide between the first and second bushings (14, 16).

## Description

### Field of the invention

The present invention relates generally to vehicles and, more particularly, the fastening of elements of a vehicle door assembly.

### Background of the invention

Door handle assemblies generally include a handle, or grip member, which is fastened to a bracket which is fixed relative to the door panel. Usually, two fastening points are provided on the bracket for fastening the handle. When the length of the handle is long, a small dispersion in the dimensions of the door panel may cause a misalignment of the door handle with regard to the fastening points.

There is therefore a need to provide a fastening assembly for compensating angular variations due to a misalignment between the door panel and the bracket of the handle assembly.

### Summary of the invention

An object of the invention is to provide a tolerance-compensation unit to be used in a fastening assembly, in order to compensate angular variations due to misalignment of the door panel and the door handle bracket.

To this end, the invention relates to a tolerance-compensation unit for a fastening assembly, comprising:
- a base element having a central portion and a through opening provided in the central portion, the central portion having a spherical shaped first surface and an opposite, spherical shaped second surface,
- a first bushing having a spherical-shaped first surface and an opposite, planar second surface,
- a second bushing having a first spherical-shaped surface and an opposite, planar second surface,
the first and second bushings being configured to be connected together through the opening of the base element so that the central portion of the base element is sandwiched between the first and second bushings, while allowing the central portion of the base element to slide between the first and second bushings.

The tolerance-compensation unit may include the following features, considered either alone or in any technically possible combination:

The first bushing and the second bushing are releasably connected to each other, for example by the means of a snap-fit connection.

The first bushing includes a hollow-shaped, cylindrical protrusion configured to extend through the opening provided in the base element, the protrusion being provided at a free end with a connecting portion, the connecting portion being configured to releasably engage a connecting portion provided on the second bushing.

The maximum angular displacement of the base element relative to the first and second bushings is reached when an inner wall of the opening of the base element abuts on the protrusion of the first bushing.

The base element includes a connecting, peripheral portion, the peripheral portion configured to be connected to a first element to be fastened, such as a bracket of a door handle assembly.

The peripheral portion includes an inner wall, the inner wall forming a stop so that the maximum angular displacement of the base element relative to the first and second bushings is reached when the inner wall of the peripheral portion abuts on an outer wall of the first bushing relative to the first and second bushings.

The angular range of the displacement of the base element relative to the first and second bushings is at least equal to 8°.

The first bushing and the second bushing each includes a central through hole.

The invention also relates to a fastening assembly for fastening a door handle to a door bracket, the fastening assembly including a tolerance-compensation unit as disclosed above, a screw and a nut.

The fastening assembly may further include an axial compensation element, the axial compensation element being disposed so as to be in an abutment relationship with the tolerance-compensation unit.

The invention also relates to a vehicle comprising a door handle assembly, the door assembly comprising a door handle and a bracket, the handle being fastened to the bracket by the means of a fastening assembly as disclosed above.

The base element of each tolerance-compensation unit may be integral with the bracket.

### Brief description of the drawings

Figure 1 is a perspective view showing a door panel equipped with a door handle assembly according to the invention.
Figure 2 is a perspective view of the door panel of Figure 1 without the handle.
Figure 3 is an exploded view of a tolerance-compensation unit according to the invention.
Figure 4 is a cutaway view of the tolerance-compensation unit of Figure 3.
Figures 5 and 6 show a fastening assembly according to the invention, respectively with an offset angle equal to 0° and 4°.
Figures 7 and 8 show a fastening assembly according to the invention including an axial compensation device.
Figure 9 is a perspective cross-section of the door panel of Figure 1.
Figure 10 is a perspective cross-section of the bracket with a base element of the tolerance-compensation unit which is integral with the bracket.

### Detailed description

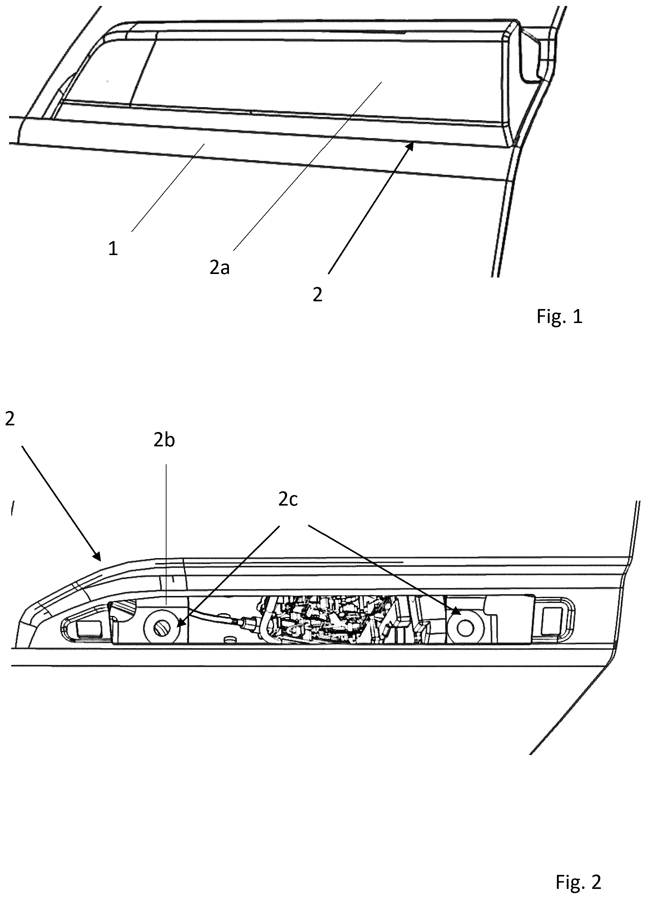

Figures 1 and 2 illustrate a door panel 1 equipped with a door handle assembly 2 according to the invention. The door handle assembly includes a handle 2a fixed relative to a bracket 2b (shown in Figure 2). Two fastening points 2c are provided on the bracket 2b, the handle being fastened to the bracket 2b by the means of fastening assemblies including screws. According to the invention, a tolerance-compensation unit is provided for each fastening assembly.

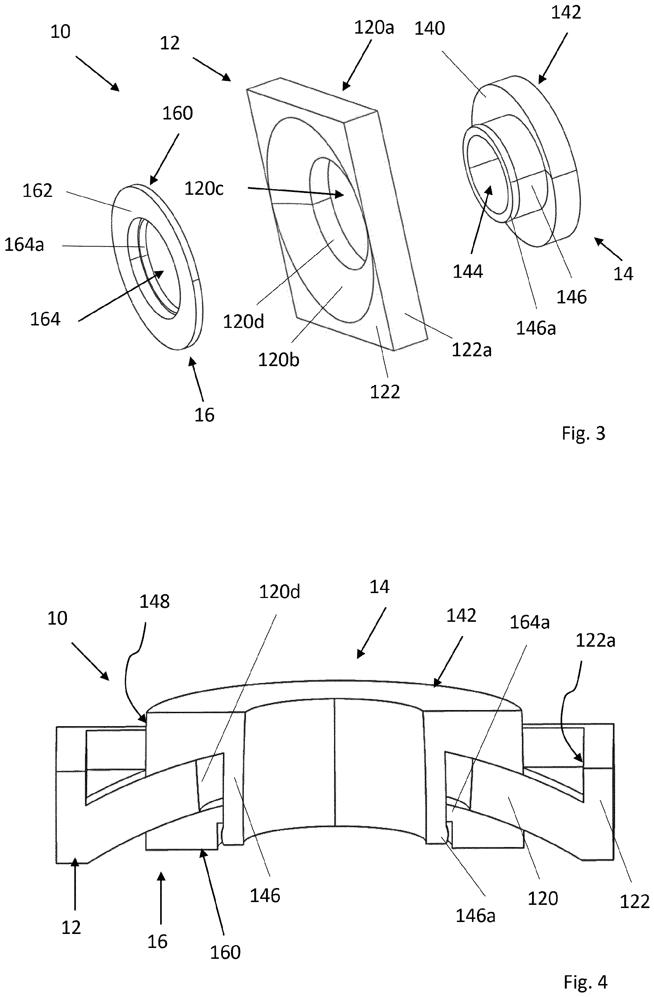

A tolerance-compensation unit 10 according to the invention is shown in Figures 3 and 4. The tolerance-compensation unit 10 includes a base element 12, a first bushing 14 and a second bushing 16.

The base element 12 includes a central portion 120 and a connecting, peripheral portion 122.

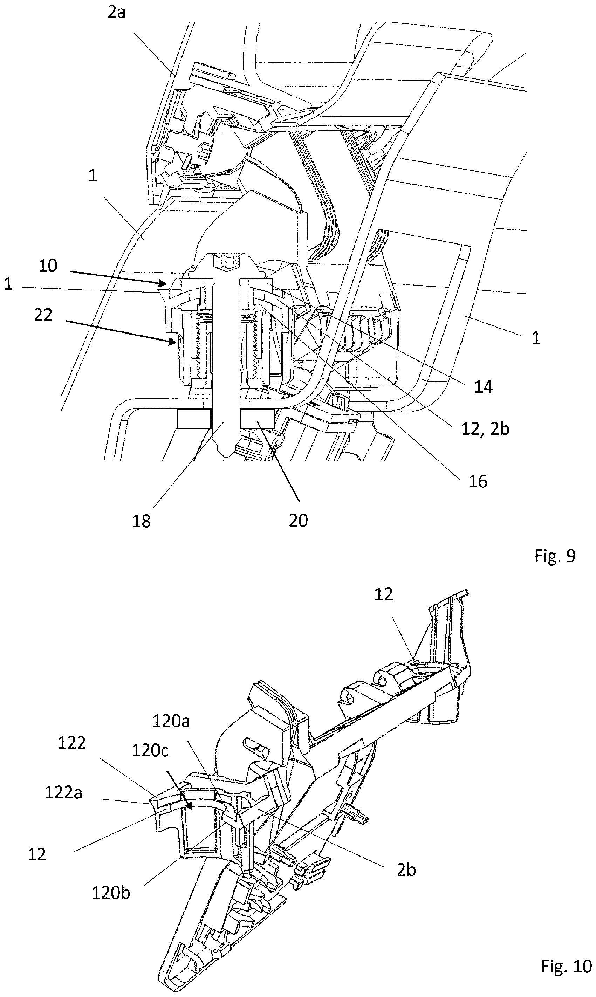

In a first embodiment shown in Figures 3 to 8, the peripheral portion 122 is configured to be releasably connected to a first element to be fastened, such as the bracket 2b of the handle assembly. In a second embodiment shown in Figures 9 and 10, the peripheral portion 122, and therefore the base element 12, can be integral with the bracket 2b.

The central portion 120 has a spherical shape. More particularly, the central portion 120 has a spherical-shaped first surface 120a, or top surface 120a, and an opposite, spherical-shaped second surface 120b, or bottom surface 120b. The central portion 120 of the base element 12 includes a central, through hole 120c, which has a cylindrical shape.

The first bushing 14 has a spherical-shaped first surface 140, or bottom surface 140 and an opposite, planar second surface 142, or top surface 142. A central through hole 144 is provided within the first bushing 14, which is cylindrical in shape.

The second bushing 16 has a spherical shaped first surface 160, or top surface 160, and an opposite, planar second surface 162, or bottom surface 162. A central through hole 164 is provided within the second bushing 16, which is cylindrical in shape.

The first bushing 14 and the second bushing 16 are configured to be connected to each other through the hole 120c of the central portion 120 of the base element 12, for example via a detachable snap-in connection. To that end, one of the first and second bushings 14, 16, for example the first bushing 14 may include a hollow-shaped, cylindrical protrusion 146. The cylindrical protrusion 146 includes at its free end a connecting portion 146a configured to releasably engage a connecting portion 164a on the inner wall of the hole 164 of the second bushing 16. The cylindrical protrusion 146 provided on the first bushing 14 is configured to extend, when the tolerance-compensation unit 10 is assembled, through the hole 120c provided in the base element, as shown in Figure 4. When the base element 12, the first bushing 14 and the second bushing 16 are assembled, the base element 12 is sandwiched between the first bushing 14 and the second bushing 16. Further, the connection between the first bushing 14 and the second bushing 16 allows the base element 12 to slide between the two bushings 14, 16. This configuration thus allows an angular displacement of the base element 12 relative to the two bushings 14, 16.

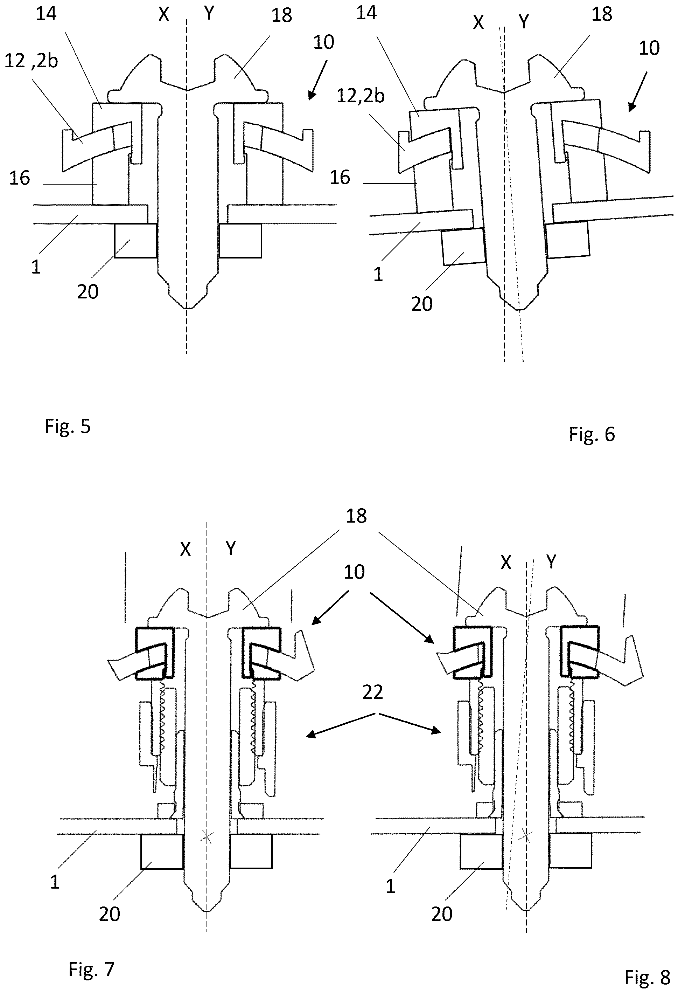

In the fastening assembly according to the invention, as shown in figures 5 and 6, the base element 12 is fixed relative to the bracket 2b of the door handle assembly 2. The first bushing 14 is configured to be in an abutment relationship with the head of a fastening screw 18, whereas the second bushing 16 is configured to be in an abutment relationship with an inner surface of the door panel 1. The screw 18 is secured to a nut 20. In Figure 5, no misalignment is caused between the base element 12 and the bushings 14, 16. Therefore, the central axis X of the through hole 120c of the base element 12 is parallel to the central axis Y of the through holes 144, 164 of the bushings 14, 16. In figure 6, a misalignment is caused and the central axis X, Y are not aligned. The tolerance-compensation unit 10 according to the invention therefore allows compensating misalignment between the bracket 2b and the door panel 1 when securing the door handle 2a to the bracket 2b.

In the embodiments shown in the figures, the angular range of the displacement of the base element 12 relative to the bushings 14, 16 is at least equal to 8°. As shown in Figure 6, the maximum angular displacement is reached when the inner wall 120d of the hole 120c of the base element 12 abuts on the protrusion 146 of the first bushing 14. In another embodiment (not shown), the maximum angular displacement is reached when an inner wall 122a of the peripheral portion 122 of the base element 12 abuts on an outer wall 148 of the first bush 14.

As shown in Figures 7 to 9, the tolerance compensation unit according to the invention can be used together with an axial compensation unit 22 allowing to compensate axial dispersion between the bracket 2b and the door panel 1. In this case, the tolerance compensation unit 10 is an abutment relationship with the axial compensation unit 22, the latter being sandwiched between the door panel 1 and the tolerance compensation unit 10.

## Claims

1. A tolerance-compensation unit (10) for a fastening assembly, comprising:
- a base element (12) having a central portion (120) and a through opening (120c) provided in the central portion (120), the central portion (120) having a spherical shaped first surface (120a) and an opposite, spherical shaped second surface (120b),
- a first bushing (14) having a spherical-shaped first surface (140) and an opposite, planar second surface (142),
- a second bushing (16) having a first spherical-shaped surface (160) and an opposite, planar second surface (162),
the first and second bushings (14, 16) being configured to be connected together through the opening (120c) of the base element (12) so that the central portion (120) of the base element (12) is sandwiched between the first and second bushings (14, 16), while allowing the central portion (120) of the base element (12) to slide between the first and second bushings (14, 16).

2. A tolerance-compensation unit (10) according to claim 1, wherein the first bushing (14) and the second bushing (16) are releasably connected to each other, for example by the means of a snap-fit connection.

3. A tolerance-compensation unit (10) according to claim 2, wherein the first bushing (14) includes a hollow-shaped, cylindrical protrusion (146) configured to extend through the opening (120c) provided in the base element (12), the protrusion (146) being provided at a free end with a connecting portion (146a), the connecting portion (146a) being configured to releasably engage a connecting portion (164a) provided on the second bushing (16).

4. A tolerance-compensation unit (10) according to the preceding claim, wherein the maximum angular displacement of the base element (12) relative to the first and second bushings (14, 16) is reached when an inner wall (120d) of the opening (120c) of the base element (12) abuts on the protrusion (146) of the first bushing (14).

5. A tolerance-compensation unit (10) according to anyone of claims 1 to 4, wherein the base element (12) includes a connecting, peripheral portion (122), the peripheral portion (122) configured to be connected to a first element to be fastened, such as a bracket (2b) of a door handle assembly (2).

6. A tolerance-compensation unit (10) according to anyone of claims, wherein the peripheral portion (122) includes an inner wall (122a), the inner wall (122a) forming a stop so that the maximum angular displacement of the base element (12) relative to the first and second bushings (14, 16) is reached when the inner wall (122a) of the peripheral portion (122) abuts on an outer wall (148) of the first bushing (14).

7. A tolerance-compensation unit (10) according to claim 3, wherein the angular range of the displacement of the base element (12) relative to the first and second bushings (14, 16) is at least equal to 8°.

8. A tolerance-compensation unit (10) according to the preceding claim, wherein the first bushing (14) and the second bushing (16) each includes a central through hole (144, 164).

9. A fastening assembly for fastening a door handle (2a) to a door bracket (2b), the fastening assembly including a tolerance-compensation unit (10) according to the preceding claims, a screw (18) and a nut (20).

10. A fastening assembly according to the preceding claim, including an axial compensation element (22), the axial compensation element (22) being disposed so as to be in an abutment relationship with the tolerance-compensation unit (10).

11. A vehicle comprising a door handle assembly (2), the door assembly comprising a door handle (2a) and a bracket (2b), the handle (2a) being fastened to the bracket (2b) by the means of a fastening assembly according to anyone of claims 9 and 10.

12. A vehicle according to claim 11, wherein the base element (12) of each tolerance-compensation unit (10) is integral with the bracket (2b).
